# EUROPEAN PATENT APPLICATION

(11) **EP 4 394 316 A1**
(43) Date of publication of application: **03.07.2024**
(21) Application number: 22217439.3
(22) Date of filing: 31.12.2022
(51) Int. Cl.: G01C 15/00

(54) **METHOD AND SYSTEM FOR EVALUATING A POSE FOR A LASER INSTRUMENT**

(71) Applicant: Hilti Aktiengesellschaft, 9494 Schaan (LI)
(72) Inventor: Reyes-Aviles, Fernando, 8020 Graz (AT); Gloor, Thomas, 9495 Triesen (LI); Arth, Clemens, 8111 Gratwein-Straßengel (AT)
(74) Representative: Hilti Aktiengesellschaft Corporate Intellectual Property

(57) **Abstract**

Method for evaluating a pose for a laser instrument performed by the laser instrument, which includes a distance measuring device, an angle measuring device, and a device control unit, and by a supervisory device, which has evaluation, data processing and control functionality, is configured to perform an algorithm to determine a pose value via mathematical or numerical operation and is connected via a communication link to the laser instrument. The method comprises:
▪ second measuring points (1-2, ..., 17-2) having second position data are determined,
▪ a second pose value (POSE-2) for the pose of the laser instrument is determined from the second measuring points (1-2, ..., 17-2) and from the polyline (P) by applying an algorithm to determine a pose value, and
▪ a first pose value and the second pose value (POSE-2) are evaluated by applying a reference criterion to the first and second pose values.

## Description

The present invention relates to a method for evaluating a pose for a laser instrument according to the definition of claim 1, to a computer program code according to the definition of claim 12, and to a system for evaluating a pose for a laser instrument according to the definition of claim 13.

### Background of the invention

Robotic total stations are used in construction industries to take individual, highly accurate measurements within a worksite environment, using a highly precise electronic distance measuring device (EDM) and highly accurate motors to rotate this EDM. Centered within a robotic total station is its right-handed coordinate frame. The orientation of the coordinate system is usually such that the devices x-axis pointing towards right, y-axis pointing towards the floor and z-axis pointing into forward direction.

A single measurement of a 3D measuring point, delivered by a robotic total station is composed of a triplet of values, namely the angular rotation around the y-axis of the robotic total station, the angular rotation around the x-axis of the robotic total station, and a distance measurement given by the EDM, relating a 3D measuring point in the worksite environment uniquely to the robotic total station. The afore-mentioned angular rotation values around the y-axis and x-axis are referred to as horizontal angle (HA) and, respectively, vertical angle (VA). Both values can be controlled and set by the robotic total station to control the pointing direction of the EDM.

Defining the location of a sample to be taken is usually done by the user, pointing the EDM into a certain direction and triggering the measurement process. In such a manual approach, the user has to take care about the suitability of the location of the sample, to avoid measurement errors due to, e.g., improper target surface properties or occlusions.

In an automatic workflow, the robotic total station operates autonomously and the device motion, respectively the sampling process, follows a particular pattern. The EDM is set to constantly take measurements during this process, accumulating triplets of measurement values for each individual sample, i.e., HA, VA, and distance measurements. Based on a set of parameters and the physical capabilities of the robotic total station, the sampling can be controlled to happen more or less frequently, similarly the device may rotate along the horizontal axis with varying pace.

As there is no qualitative assessment of the suitability of a certain measuring point or region in the worksite environment to take a measurement is available, an automatic workflow can easily get trapped to sample at discontinuities in the worksite environment, such as corners or edges of a wall for example. In other cases, the EDM may not deliver measurement values at all, for instance on shiny or even transparent surfaces, such as windows for example.

As a first step in practical applications, a robotic total station needs to be placed in a worksite environment, however, without having an accurate reference to the worksite environment. In other words, the position and orientation of the robotic total station within the worksite environment is not known. This position and orientation, also called a pose, needs to be determined before any further task can be conducted in a meaningful context. A pose essentially is a description of the position and orientation of a point with respect to a given coordinate frame in 6 degrees of freedom (DoF). The position makes up 3 DoF, i.e., x, y, and z, while the orientation is described within another 3 DoF, respectively pan, tilt and roll, or, respectively, the rotation angle around the three axes x, y, and z.

One crucial requirement to calculate the pose is the availability of a reference model of the environment with a known coordinate frame, through which the pose of the robotic total station can be determined. For simplicity, the coordinate frame of the reference model is assumed to have the same alignment as the robotic total station in terms of the x/y/z-axes pointing direction. However, the complexity of determining the pose of a robotic total station can be simplified by taking several properties of a robotic total station and fundamental mathematical concepts into account.

As a reference model is usually defined with 2 DoF only, i.e., a 2D floorplan neglecting height values along the y-axis, the number of positional DoF can be reduced from 3 to 2 DoF, i.e., x and z. As for robotic total stations, the EDM does not roll around its measurement axis i.e., the z-axis, the number of rotational DoF for the pose of a robotic total station can be reduced from 3 to 2 DoF. As a robotic total station has a known horizon (i.e., it knows about gravity), the reference between real gravity and the VA of a robotic total station is always known from the internal device control and sensors and does not need to be determined. Consequently, the number of rotational DoF is finally reduced from 2 to 1 DoF, and the only remaining, unknown rotational component is the rotation about the x-axis. These simplifications finally give a pose problem for a robotic total station of 3 DoF.

Known workflows to determine the pose of a robotic total station are based on manually taking measurement samples in the worksite environment and associating them to known anchors in a reference model. Based on a scalable mathematical equation system, the pose can be calculated with a varying degree of precision, depending on the amount of sampling information taken into account. In order to solve the pose calculation, a minimum number of samples needs to be taken, while an increasing number of samples usually leads to the formation of an overdetermined mathematical equation system and an overall improved accuracy of the pose estimation/calculation.

In such an exemplary workflow, known positions in the worksite environment are marked through reflective foils or physical prisms and the user's task is to navigate to these positions by changing the HA and VA of the robotic total station to point the EDM to this foil or prism, subsequently triggering a distance measurement. The collection of measurements is then used to further shape and solve the required mathematical equation system.

### Summary of the invention

Therefore, what is desired is a method and system for updating a pose for a laser instrument to increase the accuracy of the pose for the laser instrument. What is also desired is to determine the pose for a laser instrument without using reflective foils or physical prisms.

These objects are achieved by realizing the features of the independent claims. Features which further develop the invention in an advantageous manner are described in the dependent claims.

According to an aspect of the present invention, there is provided a method for evaluating a pose for a laser instrument in a first coordinate frame of a worksite environment, in which the laser instrument is positioned, wherein a first pose value was determined for the pose of the laser instrument from first measuring points having first position data in a second coordinate frame of the laser instrument and from a polyline of the worksite environment having line sections, the method being performed by the laser instrument, which comprises a distance measuring device configured to measure via a laser beam a distance to a measuring point, an angle measuring device configured to measure an orientation of the laser instrument relative to a reference orientation, and a device control unit configured to control the distance measuring device and the angle measuring device, and performed by a supervisory device, which has evaluation, data processing and control functionality and is configured to perform an algorithm to determine a pose value for the pose of the laser instrument via mathematical or numerical operation, the method comprising:
▪ second measuring points having second position data in the second coordinate frame are determined,
▪ a second pose value for the pose of the laser instrument is determined from the second measuring points and from the second polyline by applying an algorithm to determine a pose value, and
▪ the first pose value and second pose value are evaluated by applying a reference criterion to the first and second pose values.

The method for evaluating a pose for a laser instrument is performed by the laser instrument, which includes a distance measuring device, an angle measuring device, and a device control unit, and by a supervisory device, which has evaluation, data processing and control functionality, is configured to perform an algorithm to determine a pose value via mathematical or numerical operation and is connected via a communication link to the laser instrument.

The method for evaluating a pose allows to determine a second pose value for the pose of the laser instrument from second measuring points having second position data in the coordinate frame of the laser instrument and from a polyline having line sections. By using the second measuring points and the polyline to determine the second pose value and to compare the first and second pose values by applying the reference criterion, the accuracy of the pose for the laser instrument can be increased.

In a preferred version, the second pose value is defined as the pose for the laser instrument, if the second pose value is evaluated as the improved pose value of the first and second pose values when applying the reference criterion to the first and second pose values. By defining the improved pose value of the first and second pose values as pose for the laser instrument, the accuracy of the pose for the laser instrument can be increased.

In an alternative preferred version, the first pose value is kept as the pose for the laser instrument, if the second pose value is not evaluated as the improved pose value of the first and second pose values when applying the reference criterion to the first and second pose values. By defining the improved pose value of the first and second pose values as pose for the laser instrument, the accuracy of the pose for the laser instrument can be increased.

Preferably, the first pose value and second pose value are calculated via an algorithm to determine a pose value for the pose of the laser instrument via mathematical or numerical operation from measuring points, which are the first measuring points for the first pose value and the second measuring points for the second pose value, and from a polyline.

Preferably, the first measuring points are evaluated by applying a quality criterion to the first measuring points and those first measuring points that fulfill the quality criterion are defined as qualified measuring points. The qualified measuring points can be used to increase the accuracy of the pose for the laser instrument.

Preferably, the quality criterion is at least one of a maximum normal gap of the first measuring point to the correlated line section of the polyline, a minimum transversal gap of the first measuring point to the end points of the correlated line section, and a maximum difference angle between the normal direction of the correlated line section and the orientation of the first measuring point. By applying the quality criterion to the first measuring points, the accuracy of the pose for the laser instrument can be increased.

In a first preferred version, the second measuring points are determined by selecting some or all orientations of the qualified measuring points and the second position data are captured via the laser instrument by measuring at least a distance for the selected orientations of the qualified measuring points. Capturing the second position data via the laser instrument can increase the accuracy of the pose for the laser instrument. The laser instrument can be arranged in a second mode with a higher measuring accuracy to capture the second position data.

In a second preferred version, the second measuring points are determined by selecting some or all of the qualified measuring points and defining one or more additional measuring points and the second position data are determined by defining the related first position data as second position data for the selected qualified measuring points and by capturing via the laser instrument at least a distance for the additional measuring points. The second preferred version uses some or all of the qualified measuring points and one or more additional measuring points to determine the second measuring points. The first measuring points that were used to determine the first pose value for the laser instrument can be evaluated via the supervisory device by applying a quality criterion and/or manually by the user. The information about the first measuring points can be used to increase the accuracy of the pose for the laser instrument. The additional measuring points can be selected via the supervisory device by applying a quality criterion and/or manually by the user.

In a third preferred version, the second measuring points are determined by selecting the orientations of some or all of the qualified measuring points and defining one or more additional measuring points and the second position data are captured via the laser instrument by measuring at least a distance for the selected orientations of the qualified measuring points and for the additional measuring points.

Preferably, the first position data of the first measuring points are captured via the laser instrument arranged in a first mode with a first measuring accuracy, and the second position data for the second measuring points or the second position data for the additional measuring points are captured via the laser instrument arranged in a second mode with a second measuring accuracy, the second measuring accuracy being larger than the first measuring accuracy.

Preferably, the reference criterion is at least one of a number of the qualified measuring points, a distribution of the qualified measuring points along the polyline, a surface area limited by the qualified measuring points, and an estimated accuracy of a pose. By comparing the first and second pose values via the reference criterion, the accuracy of the pose for the laser instrument can be increased.

According to a further aspect of the present invention, there is provided a computer program product comprising a program code, which is stored on a computer-readable medium and which has computer-executable instructions for performing a method according to the present invention.

According to a further aspect of the present invention, there is provided a system for evaluating a pose for a laser instrument in a first coordinate frame of a worksite environment, in which the laser instrument is positioned, wherein a first pose value was determined for the pose of the laser instrument from first measuring points having first position data in a second coordinate frame of the laser instrument and from a first polyline of the worksite environment having first line sections, the system comprising
▪ the laser instrument configured to determine position data of a measuring point, the laser instrument comprising a distance measuring device configured to measure via a laser beam a distance to the measuring point, an angle measuring device configured to measure an orientation of the laser beam relative to a reference orientation, and a device control unit configured to control the distance measuring device and the angle measuring device, and
▪ a supervisory device, which has evaluation, data processing and control functionality, is configured to perform an algorithm to determine a pose value for the pose of the laser instrument via mathematical or numerical operation, and is connected via a communication link to the laser instrument,
wherein the laser instrument is configured to determine second measuring points having second position data in the second coordinate frame and the supervisory device is configured to
- determine a second pose value for the pose of the laser instrument from the second measuring points and from the second polyline, and
- evaluate the first pose value and second pose value by applying a reference criterion to the first and second pose values.

The system for evaluating a pose for a laser instrument comprises the laser instrument, which includes a distance measuring device, an angle measuring device, and a device control unit, and a supervisory device, which has evaluation, data processing and control functionality, is configured to perform an algorithm to determine a pose value via mathematical or numerical operation and is connected via a communication link to the supervisory device to the laser instrument. The system is configured to determine a first pose value for the pose of the laser instrument from first measuring points having first position data in the coordinate frame of the laser instrument and from a polyline having line sections, and to determine a second pose value for the pose of the laser instrument from second measuring points having second position data in the coordinate frame of the laser instrument and from the polyline having the line sections.

In a preferred version, the supervisory device is configured to define the second pose value as the pose for the laser instrument, if the second pose value is evaluated as the improved pose value of the first and second pose values when applying the reference criterion to the first and second pose values. By defining the improved pose value of the first and second pose values as pose for the laser instrument, the accuracy of the pose for the laser instrument can be increased.

In an alternative preferred version, the supervisory device is configured to keep the first pose value as the pose for the laser instrument, if the second pose value is not evaluated as the improved pose value of the first and second pose values when applying the reference criterion to the first and second pose values. By defining the improved pose value of the first and second pose values as pose for the laser instrument, the accuracy of the pose for the laser instrument can be increased.

### Brief Description of the drawings

The aspects of the invention are described or explained in more detail below, purely by way of example, with reference to working examples shown schematically in the drawing. Identical elements are labelled with the same reference numerals in the figures. The described embodiments are generally not shown true in scale, and they are also not to be interpreted as limiting the invention. Specifically,
- FIG. 1: shows a system for evaluating a pose for a laser instrument in a worksite environment, the system comprising the laser instrument and a remote controller connected via a communication link to the laser instrument,
- FIGS. 2A, B: show an exemplary version of the laser instrument used in the system of FIG. 1 (FIG. 2A) and a block diagram of the main components of the laser instrument as illustrated in FIG. 2A (FIG. 2B),
- FIGS. 3A, B: show an exemplary version of the remote controller used in the system of FIG. 1 (FIG. 3A) and a block diagram of the main components of the remote controller as illustrated in FIG. 3A (FIG. 3B), and
- FIGS. 4A-D: show an exemplary version how a first pose value and a second pose value can be determined for a laser instrument.

### Detailed Description

Reference will now be made in detail to the present preferred embodiment, an example of which is illustrated in the accompanying drawings. It is to be understood that the technology disclosed herein is not limited in its application to the details of construction and the arrangement of components set forth in the following description or illustrated in the drawings. The technology disclosed herein is capable of other embodiments and of being practiced or of being carried out in various ways.

Also, it is to be understood that the phraseology and terminology used herein is for the purpose of description and should not be regarded as limiting. All definitions, as defined and used herein, should be understood to control over dictionary definitions, definitions in documents incorporated by reference, and/or ordinary meanings of the defined terms. The indefinite articles "a" and "an", as used herein in the specification and in the claims, unless clearly indicated to the contrary, should be understood to mean "at least one". The phrase "and/or", as used herein in the specification and in the claims, should be understood to mean "either or both" of the elements so conjoined, i.e., elements that are conjunctively present in some cases and disjunctively present in other cases. Multiple elements listed with "and/or" should be construed in the same fashion, i.e., "one or more" of the elements so conjoined. Other elements may optionally be present other than the elements specifically identified by the "and/or" clause, whether related or unrelated to those elements specifically identified.

As used herein in the specification and in the claims, "or" should be understood to have the same meaning as "and/or" as defined above. For example, when separating items in a list, "or" or "and/or" shall be interpreted as being inclusive, i.e., the inclusion of at least one, but also including more than one of a number or list of elements, and, optionally, additional unlisted items. Only terms clearly indicated to the contrary, such as "only one of" or "exactly one of", or, when used in the claims, "consisting of" will refer to the inclusion of exactly one element of a number or list of elements. In general, the term "or" as used herein shall only be interpreted as indicating exclusive alternatives (ke. "one or the other but not both") when preceded by terms of exclusivity, such as "either", "one of", "only one of", or "exactly one of", "consisting essentially of", when used in the claims, shall have its ordinary meaning as used in the field of patent law.

As used herein in the specification and in the claims, the phrase "at least one" in reference to a list of one or more elements, should be understood to mean at least one element selected from any one or more of the elements in the list of elements, but not necessarily including at least one of each and every element specifically listed within the list of elements and not excluding any combinations of elements in the list of elements. This definition also allows that elements may optionally be present other than the elements specifically identified within the list of elements to which the phrase "at least one" refers, whether related or unrelated to those elements specifically identified.

The use of "including, or "comprising, or "having" and variations thereof herein is meant to encompass the items listed thereafter and equivalents thereof as well as additional items. Unless limited otherwise, the terms "connected", "coupled", and "mounted", and variations thereof herein are used broadly and encompass direct and indirect connections, couplings, and mountings. In addition, the terms "connected" and "coupled", and variations thereof are not restricted to physical or mechanical connections or couplings.

As used herein, the term "algorithm" means a systematic sequence of ordered steps for a solving a problem or providing an output from a specific set of inputs.

The term "position data" means data about the position of a measuring point in a coordinate frame of the laser instrument; the position data can be determined from a distance of the measuring point to the laser instrument and from an orientation of the measuring point to a reference orientation of the laser instrument. The term "first position data" is used for the position data of first measuring points, and the term "second position data" for the position data of second measuring points.

The term "polyline" refers to a polygon that represents the outer circumference of the worksite environment, in which the laser instrument is positioned, the polyline is composed of several line sections.

The term "pose" refers to the position and orientation of the laser instrument in a coordinate frame of the worksite environment, in which the laser instrument is positioned. The term "first pose value" is used for the pose value of the laser instrument that is determined from the first measuring points and the polyline of the worksite environment, and the term "second pose value" is used for the pose value of the laser instrument that is determined from the second measuring points and the polyline of the worksite environment.

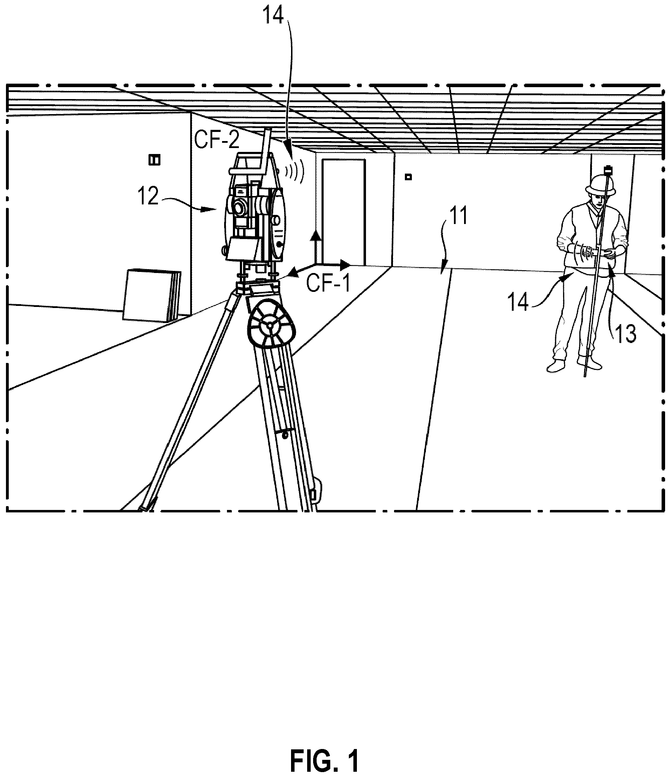

**FIG. 1** schematically illustrates a typical surveying situation in the construction sector as an example of a system **10** for evaluating a pose for a laser instrument in a coordinate frame of a worksite environment **11,** in which the laser instrument is positioned. The system 10 comprises a laser instrument **12** having distance and angle measuring functionality and a remote controller **13,** which is connected via a communication link **14** to the laser instrument 12.

Typically, the communication via the communication link 14 between the laser instrument 12 and remote controller 13 is wireless, such as using WiFi format or Bluetooth format. In FIG. 1, the communication link 14 is depicted as a wireless link, although it certainly could be constructed by use of an electrical cable, an optical cable, or any other type of suitable wired link.

To differ between the coordinate frames of the worksite environment 11 and the laser instrument 12, the coordinate frame of the worksite environment 11 is called first coordinate frame **CF-1** and the coordinate frame of the laser instrument 12 is called second coordinate frame **CF-2.**

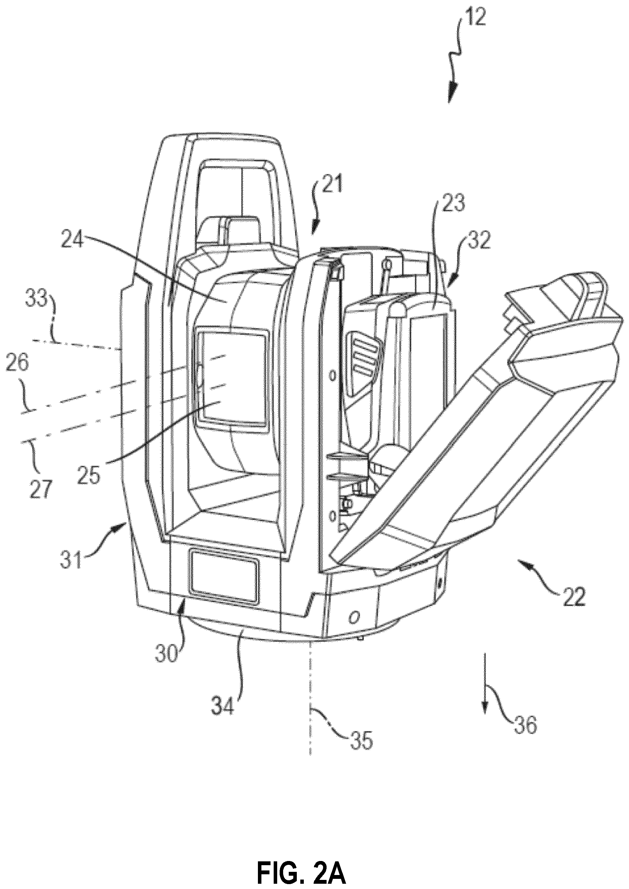

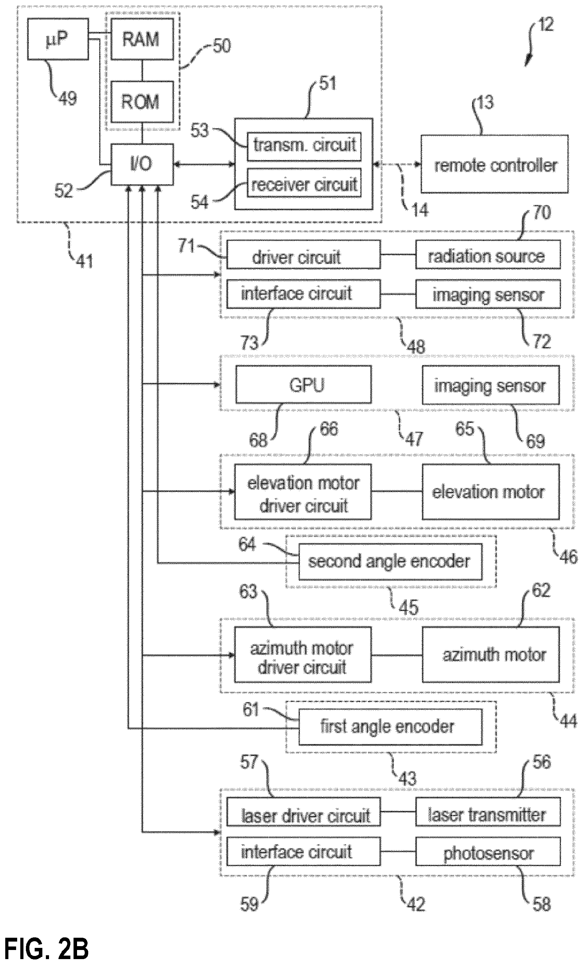

**FIGS. 2A****, B** show an exemplary version of the laser instrument 12 used in the system 10 of FIG. 1 in a perspective view (FIG. 2A) and a block diagram of the main components of the laser instrument 12 as illustrated in FIG. 2A (FIG. 2B).

The laser instrument 12 is designed as robotic total station and comprises a measuring head **21,** a main housing **22,** and a battery pack **23** configured to power the laser instrument 12. The measuring head 21 is enclosed by a housing **24,** which includes an exit window **25.** In the housing 24, a distance measuring device that emits a laser beam **26** and a tracking device that emits optical radiation **27** are arranged. The laser beam 26 and the optical radiation 27 are emitted through the exit window 25 to leave the housing 24.

The laser beam 26 is also called first light beam, and the optical radiation 27 is also called second light beam. The first light beam 26 is within a first range of wavelengths and has a first angle of aperture, and the second light beam 27 is within a second range of wavelengths and has a second angle of aperture.

The main housing 22 is U-formed and includes a bottom portion **30,** a first side portion **31,** and a second side portion **32.** The measuring head 21 is pivotably mounted to the main housing 22 about a pivoting axis **33** and is arranged between the first side portion 31 and the second side portion 32. The main housing 22 can rotate completely around its circumference at a full 360° angle with respect to a disc **34** about a rotating axis **35.**

An azimuth motor device and a first angle measuring device maybe located in the bottom portion 30 of the main housing 22 and allow to rotate the laser instrument 12 about the rotating axis 35 and to determine the direction of the laser beam 26 in a horizontal plane perpendicular to a local direction of gravitation **36.** An elevation motor device and a second angle measuring device maybe located in the first side portion 31 of the main housing 22 and allow the measuring head 21 to pivot about the pivoting axis 33 and to determine the direction of the laser beam 26 in a vertical plane parallel to the local direction of gravitation 36. To make the laser instrument 12 fully automatic, it is preferred to include a self-leveling device, which may be arranged in the bottom portion 30 of the main housing 22.

FIG. 2B shows a block diagram of the main components of the laser instrument 12. The laser instrument 12 may include a first electronic device **41,** a distance measuring device **42,** a first angle measuring device **43** configured to measure the orientation of the laser beam in the horizontal plane (horizontal angle), an azimuth motor device **44,** a second angle measuring device **45** configured to measure the orientation of the laser beam in the vertical plane (vertical angle), an elevation motor device **46,** an overview camera device **47,** and a tracking device **48** configured to track a target via the laser instrument 12.

The laser instrument 12 shown in FIG. 2A is a robotic total station. A total station is called robotic if it is able automatically to follow a target through the worksite environment. To allow following of a target, a robotic total station comes equipped with the azimuth and elevation motor devices 44, 46 for automatically rotating the laser instrument horizontally and vertically, and the tracking device 48 for tracking the target.

The first electronic device 41 comprises a first processing circuit (µP) **49,** a first memory circuit **50** that may include associated random-access memory (RAM) and read only memory (ROM), a first communications circuit **51,** and a first input/output (I/O) interface circuit **52.** The first processing circuit 49, also called device control unit, may communicate with the first memory circuit 50 and first communications circuit 51 and is configured to control the laser instrument 12. The first communications circuit 51 includes a first transmitter circuit **53** and a first receiver circuit **54** and is configured to be connected to a communications circuit of the remote controller via the communication link. The first input/output interface circuit 52 is an interface between the first processing circuit 49 and the various types of motor driver circuits and sensor circuits of the laser instrument 12.

The distance measuring device 42 includes a laser transmitter **56,** a laser driver circuit **57,** a photosensor **58,** and a laser receiver interface circuit **59.** The laser driver circuit 57 provides current for the laser transmitter 56 which emits the laser beam 26. The photosensor 58 receives at least a part of the laser beam 26 reflected at a target or a surface of the worksite environment, and the current signal that is outputted by the photosensor 58 is directed to the laser receiver interface circuit 59. After appropriate amplification and demodulation, the signal is sent via the first input/output interface circuit 52 to the first processing circuit 49.

The first angle measuring device 43 includes a first angle encoder **61,** which will provide input signals to the first processing circuit 49, so that it knows exactly in which horizontal angle the laser transmitter 56 is arranged in the horizontal plane; the output signal of the first angle encoder 61 is directed to the first input/output interface circuit 52. The azimuth motor device 44 includes an azimuth motor **62,** which is the motive force to rotate the main housing 22 of the laser instrument 12 about the first rotating axis 32, and an azimuth motor driver circuit **63,** which will provide the proper current and voltage to drive the azimuth motor 62.

The second angle measuring device 45 includes a second angle encoder **64,** which will provide input signals to the first processing circuit 49, so that it knows exactly in which vertical angle the laser transmitter 56 is arranged in the vertical plane; the output signal of the second angle encoder 64 is directed to the first input/output interface circuit 52. The elevation motor device 46 includes an elevation motor **65,** which is the motive force to pivot the measuring head 21 about the first pivoting axis 30, and an elevation motor driver circuit **66,** which will provide the proper current and voltage to drive the elevation motor 65.

The overview camera device 47 may be arranged in the measuring head 21 of the laser instrument 12 for capturing an image or a video feed generally in the direction of a sighting axis of the laser instrument 12. The overview camera device 47 may include optical elements, such as, but not limited to, an objective and a focusing lens, a graphics processing unit (GPU) **68,** and a first imaging sensor **69,** which may comprise or be constituted by a CCD-based sensor, an active pixel-sensor, a CMOS-based sensor, and/or by any other type of suitable imaging sensors.

The tracking device 48 includes an optical radiation source **70,** such as, but not limited to, an infrared (IR) transmitter or a visible light transmitter, a driver circuit **71,** a second imaging sensor **72,** and a receiver interface circuit **73.** The driver circuit 71 provides current for the optical radiation source 70 which emits optical radiation, such as, but not limited to, infrared radiation or visible radiation. The second imaging sensor 72 receives at least a part of the optical radiation reflected at a target, and the current signal that is outputted by the second imaging sensor 72 is directed to the receiver interface circuit 73. After appropriate amplification and processing, the signal is sent via the first input/output interface circuit 52 to the first processing circuit 49 for further processing and/or analyzing. The optical radiation source 70 may be configured to emit modulated optical radiation in accordance with characteristics, such as, but not limited to, a frequency.

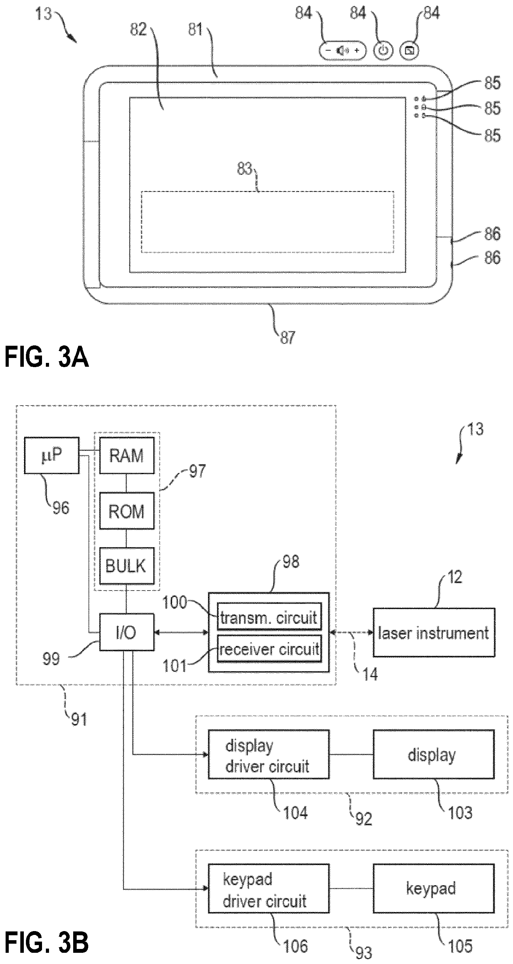

**FIGS. 3A****, B** show an exemplary version of the remote controller 13 used in the system 10 of FIG. 1 in a front view (FIG. 3A) and a block diagram of the main components of the remote controller 13 as illustrated in FIG. 3A (FIG. 3B).

The remote controller 13 is designed as tablet computer and includes a housing **81,** a touch screen display **82,** a battery **83,** a set of buttons **84,** e.g., volume control button, power on/off button, and display control button, a set of indicators **85,** e.g., for operating status, data storage status, and battery status, a set of connectors **86,** e.g., for docking, data storage, and USB, and a card slot **87.**

FIG. 3B shows a block diagram of the main components of the remote controller 13. The remote controller 13 may include a second electronic device **91,** a display device **92,** and an input device **93.**

The second electronic device 91 comprises a second processing circuit (µP) **96,** a second memory circuit **97** that may include associated random-access memory (RAM), read only memory (ROM), and some type of bulk memory (BULK), a second communications circuit **98,** and a second input/output (I/O) interface circuit **99.** The second processing circuit 96 may communicate with the second memory circuit 97 and second communications circuit 98 and is configured to control the remote controller 13. The second communications circuit 98 includes a second transmitter circuit **100** and a second receiver circuit **101** and is configured to be connected to the first communications circuit 51 of the laser instrument 12 via the communication link 14. The second input/output interface circuit 99 is an interface between the second processing circuit 96 and the various driver circuits of the remote controller 13.

In the second memory circuit 97, several program codes having computer-executable instructions for performing a method may be stored. The stored program codes may include a program code for performing a method for evaluating a pose for a laser instrument and a program code for performing an algorithm to determine a pose value via mathematical or numerical operation.

The method for evaluating a pose for a laser instrument is performed by a supervisory device of the system 10, the supervisory device having evaluation, data processing and control functionality. In the system 10, the supervisory device is integrated into the second processing circuit 96 of the second electronic device 91 of the remote controller 13. Alternatively, the supervisory device maybe integrated into the first processing circuit 49, or into the first and second processing circuits 49, 96, or in any other type of suitable processing circuit.

The display device 92 includes a display **103** and a display driver circuit **104.** The display driver circuit will be in communication with the second I/O interface circuit 99 and provides the correct interface and data signals for the display 103. If the remote controller 13 is a laptop computer, for example, then this would be the standard display seen in most laptop computers. Or, if the remote controller 13 is a tablet computer or a smart phone, in which case the display device is a much smaller physical device, the display device 103 could be a touch screen display.

The user-operated input device 93 includes a keypad **105** and a keypad driver circuit **106.** The keypad driver circuit will be in communication with the second I/O interface circuit 99 and controls the signals that interface to the keypad 105. If the display device 103 is a touch screen display, then there may not be a separate keypad on the remote controller 13, because most of the command or data to input functions will be available by touching the display itself and the keypad is integrated in the touch screen display. There may be some type of power on/off button, but that would not necessarily be considered a true keypad and typically would not be used for entering data.

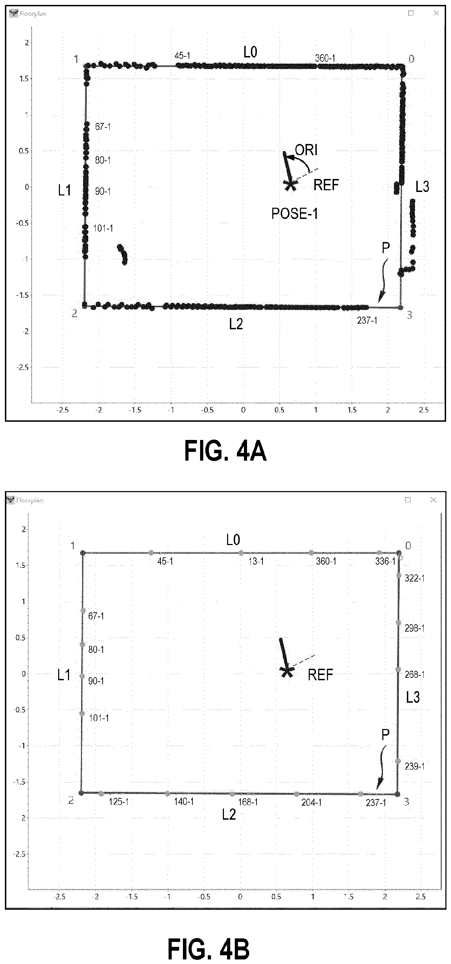

**FIGS. 4A-D** show an exemplary version how for the laser instrument 12 a first pose value **POSE-1** and a second pose value **POSE-2** can be determined. The first pose value POSE-1 is determined from first measuring points having first position data and a polyline having line sections, and the second pose value POSE-2 is determined from second measuring points having second position data and the polyline having the line sections.

FIG. 4A shows a polyline **P** that is composed of four line sections **L0, L1, L2, L3,** and a set of first measuring points **1-1,** ..., **360-1.** To determine the first position data for the first measuring points 1-1, ..., 360-1, a scan is carried out over a full circle of 360° by the laser instrument 12. For each of the first measuring points 1-1, ... , 360-1, a distance to the laser instrument 12 and an orientation **ORI** of the laser instrument 12 to a reference orientation **REF** are measured. The reference orientation REF may be defined by a fixed structure of the housing 22 of the laser instrument 12.

The first pose value POSE-1 for the pose of the laser instrument 12 is determined via the supervisory device 96 by performing an algorithm to determine a pose value via mathematical or numerical operation and using the first measuring points 1-1, ..., 360-1 and the polyline P. For example, the first pose value POSE-1 may be calculated from a cost function by considering the distance of the first measuring points to the polyline. The cost function can be minimized via mathematical operation or numerical operation, e.g., with one of the generally available heuristic solvers as NLopt or Ceres.

FIG. 4B shows the selection of the second measuring points from the set of first measuring points 1-1, ..., 360-1. In the exemplary version shown in FIG. 4B, the orientations of the second measuring points are selected from the first measuring points 1-1, ..., 360-1. During or after the calculation of the first pose value POSE-1, the first measuring points 1-1, ..., 360-1 can be evaluated by applying a quality criterion. Those first measuring points that fulfill the quality criterion are called qualified measuring points. From all qualified measuring points a set of 17 qualified measuring points is selected and defined as second measuring points **1-2, 17-2.**

The quality criterion may be at least one of a maximum normal gap **GAP-N** of the first measuring point to the correlated line section of the polyline, a minimum transversal gap **GAP-T** of the first measuring point to the end points of the correlated line section, and a maximum difference angle **DPhi** between the normal direction **N** of the correlated line section and the orientation of the first measuring point.

The qualified measuring points have a normal gap to the correlated line section that is smaller than the defined maximum normal gap, and/or transversal gaps to the end points that are larger than the defined minimum transversal gap, and/or a difference angle that is smaller than the maximum difference angle, wherein the normal gap is measured along the normal direction of the correlated line section, the transversal gaps are measured along the transversal direction of the correlated line section, and the difference angle is measured between the normal direction of the correlated line section and the orientation of the first measuring point.

According to the exemplary version shown in FIG. 4B, the orientation for the second measuring points 1-2, ... , 17-2 are selected from the qualified measuring points, and the second position data are captured via the laser instrument 12 by measuring at least a distance for each of the selected orientations. Additionally, one or more additional measuring points may be defined, and the position data for the additional measuring points are captured via the laser instrument 12 by measuring at least a distance of the additional measuring points to the laser instrument 12.

The laser instrument 12 may be switchable between a first mode, in which position data are measured with a first measuring accuracy, and a second mode, in which position data are measured with a second measuring accuracy, the second measuring accuracy being larger than the first measuring accuracy. To reduce the overall time to determine a pose for the laser instrument 12 and to update that pose, the laser instrument 12 may be arranged in the first mode to capture the first position data for the first measuring points, and in the second mode to capture the second position data for the second measuring points. The first position data will be captured with the first measuring accuracy and the second position data with the larger second measuring accuracy.

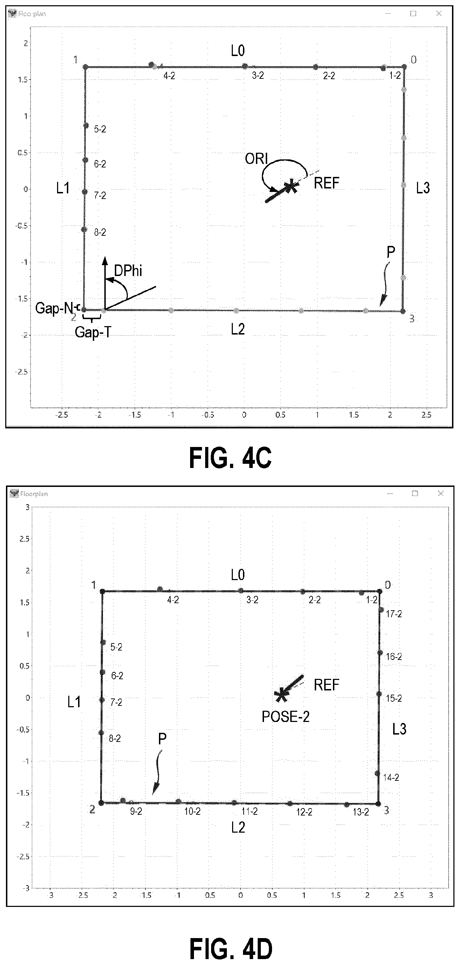

FIG. 4C shows how the second position data are captured via the laser instrument 12 for the second measuring points 1-2, ..., 17-2. To determine the second position data, the laser instrument 12 is oriented according to the orientation and a distance is measured via the distance measuring device 42 of the laser instrument 12.

FIG. 4D shows the second pose value POSE-2 for the pose of the laser instrument 12 that is determined via the supervisory device 96 by performing an algorithm to determine a pose value via mathematical or numerical operation and using the second measuring points 1-2, ... , 17-2 and the polyline P. For example, the second pose value POSE-2 may be calculated from a cost function by considering the distance of the second measuring points to the polyline. The cost function can be minimized via mathematical operation or numerical operation, e.g., with one of the generally available heuristic solvers as NLopt or Ceres.

The method for evaluating a pose for the laser instrument 12 comprises:
▪ second measuring points 1-2, ... , 17-2 having second position data in the second coordinate frame CF-2 are determined,
▪ a second pose value POSE-2 for the pose of the laser instrument 12 is determined from the second measuring points 1-2, ... , 17-2 and from the polyline P by applying an algorithm to determine a pose value, and
▪ the first pose value POSE-1 and second pose value POSE-2 are evaluated by applying a reference criterion to the first and second pose values POSE-1, POSE-2.

## Claims

1. Method for evaluating a pose for a laser instrument (12) in a first coordinate frame (CF-1) of a worksite environment (11), in which the laser instrument (12) is positioned, wherein a first pose value (POSE-1) was determined for the pose of the laser instrument (12) from first measuring points (1-1, ..., 360-1) having first position data in a second coordinate frame (CF-2) of the laser instrument (12) and from a polyline (P) of the worksite environment (11) having line sections (L0, L1, L2, L3), the method being performed by the laser instrument (12), which comprises a distance measuring device (42) configured to measure via a laser beam (26) a distance to a measuring point, an angle measuring device (43, 45) configured to measure an orientation (ORI) of the laser instrument (12) relative to a reference orientation (REF), and a device control unit (49) configured to control the distance measuring device (42) and the angle measuring device (43, 45), and performed by a supervisory device (96), which has evaluation, data processing and control functionality and is configured to perform an algorithm to determine a pose value for the pose of the laser instrument (12) via mathematical or numerical operation, the method comprising:
▪ second measuring points (1-2, ..., 17-2) having second position data in the second coordinate frame (CF-2) are determined,
▪ a second pose value (POSE-2) for the pose of the laser instrument (12) from the second measuring points (1-2, ..., 17-2) and from the polyline (P) is determined by applying an algorithm to determine a pose value, and
▪ the first pose value (POSE-1) and second pose value (POSE-2) are evaluated by applying a reference criterion to the first and second pose values (POSE-1, POSE-2).

2. Method according to claim 1, wherein the second pose value (POSE-2) is defined as the pose for the laser instrument (12), if the second pose value (POSE-2) is evaluated as the improved pose value of the first and second pose values (POSE-1, POSE-2) when applying the reference criterion to the first and second pose values (POSE-1, POSE-2).

3. Method according to claim 1, wherein the first pose value (POSE-1) is kept as the pose for the laser instrument (12), if the second pose value (POSE-2) is not evaluated as the improved pose value of the first and second pose values (POSE-1, POSE-2) when applying the reference criterion to the first and second pose values (POSE-1, POSE-2).

4. Method according to any of claims 1 to 3, wherein the first pose value (POSE-1) and second pose value (POSE-2) are calculated via an algorithm to determine a pose value for the pose of the laser instrument (12) via mathematical or numerical operation from measuring points, which are the first measuring points (1-1, ..., 360-1) for the first pose value (POSE-1) and the second measuring points (1-2, ..., 17-2) for the second pose value (POSE-2), and from a polyline (P).

5. Method according to any of claims 1 to 4, wherein the first measuring points (1-1, ..., 360-1) are evaluated by applying a quality criterion to the first measuring points (1-1, ..., 360-1) and those first measuring points (1-1, ..., 360-1) that fulfill the quality criterion are defined as qualified measuring points.

6. Method according to claim 5, wherein the quality criterion is at least one of a maximum normal gap (Gap-N) of the first measuring point to the correlated line section of the polyline, a minimum transversal gap (Gap-T) of the first measuring point to the end points of the correlated line section, and a maximum difference angle (DPhi) between the normal direction (N) of the correlated line section and the orientation of the first measuring point.

7. Method according to any of claims 5 to 6, wherein the second measuring points (1-2, ..., 17-2) are determined by selecting some or all orientations of the qualified measuring points and the second position data are captured via the laser instrument (12) by measuring at least a distance for the selected orientations.

8. Method according to any of claims 5 to 6, wherein the second measuring points are determined by selecting some or all of the qualified measuring points and defining one or more additional measuring points and the second position data are determined by defining the related first position data as second position data for the selected qualified measuring points and by capturing via the laser instrument (12) at least a distance for the additional measuring points.

9. Method according to any of claims 5 to 6, wherein the second measuring points are determined by selecting the orientations of some or all of the qualified measuring points and defining one or more additional measuring points and the second position data are captured via the laser instrument (12) by measuring at least a distance for the selected orientations of the qualified measuring points and for the additional measuring points.

10. Method according to any of claims 7 to 9, wherein the first position data of the first measuring points are captured via the laser instrument (12) arranged in a first mode with a first measuring accuracy, and the second position data for the second measuring points or the second position data for the additional measuring points are captured via the laser instrument (12) arranged in a second mode with a second measuring accuracy, the second measuring accuracy being larger than the first measuring accuracy.

11. Method according to any of claims 1 to 3, wherein the reference criterion is at least one of a number of qualified measuring points, a distribution of the qualified measuring points along the polyline, a surface area limited by the qualified measuring points, and an estimated accuracy of a pose.

12. Computer program product comprising a program code, which is stored on a computer-readable medium and which has computer-executable instructions for performing a method according to any of claims 1 to 11.

13. System (10) for evaluating a pose for a laser instrument (12) in a first coordinate frame (CF-1) of a worksite environment (11), in which the laser instrument (12) is positioned, wherein a first pose value (POSE-1) was determined for the pose of the laser instrument (12) from first measuring points (1-1, ..., 360-1) having first position data in a second coordinate frame (CF-2) of the laser instrument (12) and from a polyline (P) of the worksite environment (11) having line sections (L0, L1, L2, L3), the system (10) comprising:
▪ the laser instrument (12), which is configured to determine position data of a measuring point, the laser instrument (12) comprising a distance measuring device (42) configured to measure via a laser beam (26) a distance to the measuring point, an angle measuring device (43, 45) configured to measure an orientation (ORI) of the laser beam (26) relative to a reference orientation (REF), and a device control unit (49) configured to control the distance measuring device (42) and the angle measuring device (43, 45), and
▪ a supervisory device (96), which has evaluation, data processing and control functionality, is configured to perform an algorithm to determine a pose value for the pose of the laser instrument (12) via mathematical or numerical operation, and is connected via a communication link (14) to the laser instrument (12),
wherein the laser instrument (12) is configured to determine second measuring points (1-2, ..., 17-2) having second position data in the second coordinate frame (CF-2) and the supervisory device (96) is configured to
- determine a second pose value (POSE-2) for the pose of the laser instrument (12) from the second measuring points (1-2, ..., 17-2) and from the polyline (P), and
- evaluate the first pose value (POSE-1) and second pose value (POSE-2) by applying a reference criterion to the first and second pose values (POSE-1, POSE-2).

14. System according to claim 13, wherein the supervisory device (96) is configured to define the second pose value (POSE-2) as the pose for the laser instrument (12), if the second pose value (POSE-2) is evaluated as the improved pose value of the first and second pose values (POSE-1, POSE-2) when applying the reference criterion to the first and second pose values (POSE-1, POSE-2).

15. System according to claim 13, wherein the supervisory device (96) is configured to keep the first pose value (POSE-1) as the pose for the laser instrument (12), if the second pose value (POSE-2) is not evaluated as the improved pose value of the first and second pose values (POSE-1, POSE-2) when applying the reference criterion to the first and second pose values (POSE-1, POSE-2).
